# EUROPÄISCHE PATENTSCHRIFT

(11) **EP 3 028 571 B1**
(45) Veröffentlichungstag und Bekanntmachung des Hinweises auf die Patenterteilung: **25.07.2018**
(21) Anmeldenummer: 15197171.0
(22) Anmeldetag: 01.12.2015
(51) Int. Cl.: A01N 43/40, A01N 39/02, A01N 33/22, A01N 37/22, A01N 43/80, A01N 37/26, A01N 47/30, A01P 15/00, A01P 13/00

(54) **VERFAHREN UND WIRKMITTEL ZUR BEKÄMPFUNG VON NEOPHYTEN**
METHOD AND ACTIVE COMPOSITION FOR COMBATING NEOPHYTES
PROCÉDÉ ET COMPOSITION ACTIF DESTINE A LUTTER CONTRE LES NEOPHYTES

(30) Priorität: 02.12.2014 CH 18482014
(43) Veröffentlichungstag der Anmeldung: 08.06.2016
(73) Patentinhaber: GrünLive GmbH, 5015 Erlinsbach (CH)
(72) Erfinder: Peier, Siegfried, 5015 Erlinsbach (CH)
(74) Vertreter: Tompkin, Christine

(56) Entgegenhaltungen:
- Seong Soo Han: "Development of Selective Herbicide for Control of Weeds in Turf", Korean Journal of Weed Science, 1. Juni 1987 (1987-06-01), Seiten 186-199, XP055249783, Gefunden im Internet: URL:http://ocean.kisti.re.kr/downfile/volu me/ksws/JCHHBQ/1987/v7n2/JCHHBQ_1987_v7n2_ 186.pdf [gefunden am 2016-02-12]
- Anonymous: "How to: Kill a tree", , 11. Mai 2007 (2007-05-11), Seiten 1-4, XP055250153, Gefunden im Internet: URL:http://slavenation.com/index.php/2007/ 05/11/how-to-kill-a-tree/ [gefunden am 2016-02-15]
- John Lampe: "Injection of Herbicides into Rhizomes of Knotweeds and Other Invasive Species", , 29. Oktober 2012 (2012-10-29), Seiten 1-58, XP055250034, Upper Midwest Invasive Species Conference, La Crosse, Wisconsin, U.S.A. Gefunden im Internet: URL:http://www.slideshare.net/johnlampe/in jection-of-herbicides-into-rhizomes-of-kno tweeds-and-other-invasive-species [gefunden am 2016-02-15]
- "Fact Sheet: Japanese Knotweed", , 20. Mai 2005 (2005-05-20), Seiten 1-3, XP055250017, Gefunden im Internet: URL:http://www.nps.gov/plants/alien/fact/p df/faja1.pdf [gefunden am 2016-02-15]
- "Proceedings California Invasive Plant Council Symposium Volume 8", , 7. Oktober 2004 (2004-10-07), Seiten 1-149, XP055250102, Berkeley, California, U.S.A. Gefunden im Internet: URL:http://www.cal-ipc.org/symposia/archiv e/pdf/18854.pdf [gefunden am 2016-02-15]
- Timothy S Prather ET AL: "Knotweed shrubs: identification, biology and management", Pacific Northwest Extension Publication PNW 610, 1. Oktober 2009 (2009-10-01), Seiten 1-8, XP055250023, University of Idaho, U.S.A. Gefunden im Internet: URL:http://www.cals.uidaho.edu/edcomm/pdf/ pnw/pnw0610.pdf [gefunden am 2016-02-15]
- Mandy Tu ET AL: "Weed Control Methods Handbook: Tools & Techniques for Use in Natural Areas", , 1. April 2001 (2001-04-01), Seiten 1-219, XP55249982, UC Davies, U.S.A. Gefunden im Internet: URL:http://www.invasive.org/gist/products/ handbook/methods-handbook.pdf [gefunden am 2016-02-15]
- Ron P Crockett: "Controlling Knotweed (Polygonum cuspidatum Sieb. & Zucc.)", , 26 May 2005 (2005-05-26), pages 1-5, XP055362586, U.S.A. Retrieved from the Internet: URL:https://www.jkinjectiontools.com/docs/ research_docs/Dr. Ron Crockett JK Control Strategies.pdf [retrieved on 2017-04-06]
- J Murray Mchugh: "A review of literature and field practices focused on the management and control of invasive knotweed", , 1 March 2006 (2006-03-01), pages 1-32, XP055362590, West Haven, VT, U.S.A. Retrieved from the Internet: URL:https://www.invasive.org/gist/moredocs /polspp02.pdf [retrieved on 2017-04-06]
- .: "Drill and fill treatment", , 1 January 2012 (2012-01-01), pages 1-2, XP55362490, Australia Retrieved from the Internet: URL:https://www.treesforlife.org.au/sites/ default/files/BFL/Fact_Sheets/Drill_and_Fi ll_fact_sheet_Feb2012.pdf [retrieved on 2017-04-06]

## Beschreibung

### Technisches Gebiet

Die Erfindung betrifft ein Verfahren zur Bekämpfung von Pflanzen, insbesondere invasiven Pflanzen und invasiven Neophyten wie zum Beispiel Bambus oder japanischer Staudenknöterich. Sie betrifft zudem ein Wirkmittel zur Beseitigung von Pflanzen, insbesondere Neophyten.

### Stand der Technik

Invasive Neophyten stellen in vielen Breiten ein zunehmendes Problem dar. Neophyten sind Pflanzen, die in einem bestimmten geographischen Gebiet sich über natürliche Prozesse neu ansiedeln oder versehentlich oder auch absichtlich angesiedelt worden sind. Gewisse Neophyten gelten gegenüber der bestehenden Flora als invasiv, indem sie die bestehenden Pflanzen verdrängen und dabei auch die bestehende Fauna beeinträchtigen. Zudem sind invasive Neophyten bekannt, die durch ihr äusserst starkes Wurzelwerk Böschungen, Mauerwerk, Strassenbeläge sowie Schotterunterlagen für Bahngeleise durchbrechen und schwächen und so erhebliche Schäden verursachen. Solche Neophyten sind zum Beispiel der Japanknöterich. Auch in Gärten ist beispielsweise Bambus ein zunehmendes Problem. Gängige Verfahren zur Bekämpfung sind herbizide Blattanwendungen, Anwendungen auf abgeschnittene Stämme und Stengel, sowie die Injektion von Herbiziden wie Glyphosat oder Triclopyr in intakte oder abgesägte Stämme und Stengel (siehe beispielsweise "Fact Sheet: Japanese Knotweed": http://www.nps.gov/ plants/alien/fact/pdf/faja1 .pdf, oder J.M. McHugh, "A review of literature and field practices focused on the management and control of invasive knotweed": https://www.invasive.org/ gist/moredocs/polspp02.pdf).

Derzeit werden in der Schweiz Methoden zur Bekämpfung von solchen Neophyten angewendet, die auf dem Ausbringen von Chemikalien basieren, die jedoch nachweislich Fliess- und Grundwasser und somit Trinkwasser verunreinigen und bei Mensch und Tier Krankheiten auslösen können. Eines dieser Chemikalien enthält Glyphosat, das in Ländern der Europäischen Union wegen seiner Toxizität verboten ist.

### Beschreibung der Erfindung

Der vorliegenden Erfindung beruht auf der Aufgabenstellung, ein Verfahren sowie ein Wirkmittel bereitzustellen, das eine dauerhafte Beseitigung von unerwünschten Pflanzen, insbesondere invasiven Pflanzen und Neophyten ermöglicht und insbesondere keine gesundheits- und umweltschädigende Auswirkungen verursacht.
Gemäss der Erfindung und gemäss Anspruch 1 umfasst ein Verfahren zur Beseitigung von Pflanzen aus der Gruppe
Japanischer Staudenknöterich (Reynoutria japonica oder Fallopia japonica), Sachalin-Knöterich (Reynoutria sachalinensis),
Himalaja-Knöterich (Polygonum polystachyum),
Bastard-Knöterich,
Bambus (Phyllostachys aurea),
Bambus (Pleioblastus pygamaeus Distichus),
Essigbaum (Rhus typhina),
Katzenschwanz (Acalypha hispida)
ohne Entfernung von Erdreich, Mauerwerk, Strassenbelag oder Gleisunterlage folgende Schritte:
   a) die Bestimmung und/oder Markierung eines zu behandelnden Flächenbereichs mit zu beseitigenden Pflanzen.
   b) das Freilegen der zu beseitigenden Pflanzen und deren Wurzelbereich im Flächenbereich aus Schritt a), indem die zu beseitigenden Pflanzen durch Mähen von umliegenden nicht-invasiven Pflanzen freigelegt werden und jeweils die zu beseitigenden Pflanzen bis kurz über dem Boden abgeschnitten und ein kleiner Teil der Pflanzen dahingehend stehen gelassen werden, sodass sie als solche erkennbar sind.
   c) Ausführen von Bohrungen im Wurzel- und Rhizombereich der zu beseitigenden Pflanzen im Untergrund mittels eines Bohrgeräts.
   d) Injizierung eines Wirkmittels enthaltend Triclopyr, ein schwer wasserlösliches Vorauflaufherbizid ("pre-emergence treatment herbicide") und Wasser mittels einer Lanze in die in Schritt c) ausgeführten Bohrungen in den Wurzeln während der Vegetationszeit der Pflanze, wobei das Vorauflaufherbizid eine Wasserlöslichkeit von höchstens 1.1 g/Liter bei 20°C aufweist.

Zunächst wird in Schritt a) der zu behandelnde Flächenbereich bestimmt, um möglichst alle zu behandelnden Bereiche und Pflanzen zu berücksichtigen und dabei jedoch den Bereich auch möglichst zu begrenzen, um eine unnötige Behandlung von nicht befallenen Flächen zu vermeiden. In Schritt b) werden die zu beseitigenden Pflanzen durch Mähen von umliegenden nicht-invasiven Pflanzen oder Entfernen von Objekten freigelegt. Dies ermöglicht die Identifizierung der zu beseitigenden Pflanzen und der Erdbereiche, in denen Ausläufer vermutet werden können. Durch das Anbohren der Wurzeln in Schritt c) werden die Wurzelbereiche der invasiven Pflanzen so tief wie möglich sowie Rhizome durch mehrere Bohrungen angebohrt und für die Behandlung zugänglich gemacht. Dabei wird möglichst darauf geachtet, dass angrenzende Pflanzen, die nicht behandelt werden sollen, ausgespart bleiben.

In Schritt d) wird das eigentliche Wirkmittel in jeweils Einzelstockbehandlung appliziert, indem mittels einer Lanze das Mittel gezielt nur an den zu beseitigenden Pflanzen injiziert wird. Das Mittel wird also nicht breitflächig ausgebracht, sondern nur an jenen einzelnen Pflanzen injiziert, wo es notwendig ist. Je nach Stärke und Alter der Pflanze wird die Menge des applizierten Wirkmittels angepasst.

Das verwendete Wirkmittel enthält eine Mischung von Triclopyr und dem schwer wasserlöslichen Vorauflaufherbizid und Wasser, wobei das Triclopyr als eigentlicher Wirkstoff zur Abtötung von Wurzeln und Rhizomen agiert. Es ist als schneller Wirkstoff für das gezielte Abtöten von Pflanzen geeignet. Das schwer wasserlösliche Vorauflaufherbizid dient als Stabilisator, indem es in einer chemischen Reaktion das Triclopyr bindet. Durch diese Bindung wird das Triclopyr nach der Injizierung nicht ausgewaschen, sondern behält seine volle Wirkung in der Abtötung der Wurzeln, mit denen es in Kontakt kommt.

Die Verwendung des Triclopyrs zusammen mit der bindenden Wirkung des schwer wasserlöslichen Vorauflaufherbizids und die gezielte Injizierung des Wirkmittels in den Wurzel- und Rhizombereich erzielen eine schnelle Abtötung der Pflanzen, wobei der Wirkstoff sparsam angewendet und er nicht unnötig weggewaschen wird. Ein Abfluss des eingesetzten Wirkmittels ist möglichst minimiert, sodass eine Beeinträchtigung des Grundwassers praktisch ausgeschlossen werden kann. So wird eine wirkungsvolle Behandlung ermöglicht, bei der Umweltschäden minimiert sind.

Die Erfindung hat den Vorteil, dass das Verfahren eine kostengünstige und dauerhafte Beseitigung von Neophyten ermöglicht. Nach der erfindungsgemässen Behandlung sind Nachbehandlungen nur beschränkt notwendig. Die Neophyten können an Ort ohne Entfernung des Erdreichs, des Mauerwerks, Strassenbelags oder Gleisunterlage beseitigt werden. Dies bedeutet eine zuverlässige Beseitigung innerhalb eines absehbaren und relativ genau bemessbaren Zeitraums. Zudem sind der Arbeitsaufwand sowie der Aufwand für Abführung und Entsorgung von Abfall enorm reduziert. Im Vergleich zu einem Abbaggern, Abführen und Entsorgen des gesamten Erdreichs erreicht das erfindungsgemässe Verfahren eine Reduzierung der Kosten um einen Faktor 10.

Das erfindungsgemässe Verfahren eignet sich zur Beseitigung durch Abtötung von verschiedenen Pflanzen, insbesondere Neophyten, die zum Beispiel im mitteleuropäischen Raum auftreten. Das erfindungsgemässe Verfahren wird zur Beseitigung folgender Pflanzen verwendet, wobei diese Aufzählung nicht abschliessend ist:
Japanischer Staudenknöterich (Reynoutria japonica, auch als Fallopia japonica bekannt),
Sachalin-Knöterich (Reynoutria sachalinensis),
Himalaja-Knöterich (Polygonum polystachyum),
Bastard-Knöterich (eine Kreuzung des Japan-Knöterich und Sachalin-Knöterich, die sich in Europa entwickelt hat.)
Bambus, winterhart (Phyllostachys aurea),
Bambus anderer Art (z.B. Pleioblastus pygamaeus Distichus),
Essigbaum (Rhus typhina),
anderen invasiven Pflanzen inklusive indigene Pflanzen sowie Neophyten, wie Katzenschwanz (Acalypha hispida).

Die Ausbringung des Wirkmittels direkt auf die angebohrten Wurzeln bewirkt eine sofortige und fast vollständige Aufnahme des Wirkmittels durch Rhizome, das heisst starke Austriebe, und das Wurzelholz selbst. Das Mittel gelangt nicht in das Erdreich sondern wird von der Pflanze aufgenommen, wodurch sie darauf innert Wochen abstirbt. Das Wirkmittel gelangt so nicht in Kontakt mit Mensch, Tier oder andere Pflanzen, die beibehalten werden sollen, und lässt diese unversehrt.

Das Verfahren wird vorzugsweise während der Vegetationszeit der Pflanze durchgeführt, da die Aufnahme des Wirkmittels während des Wachstums der Pflanze am stärksten ist und das erfindungsgemässe Verfahren am wirksamsten ist. In mitteleuropäischen Breiten wird das Verfahren also vorzugsweise ca. im Mai bis Oktober durchgeführt. Das Verfahren wird zudem vorzugsweise unter Beachtung der Witterung und der Temperaturen dann ausgeführt, wenn keine starken Regengüsse erwartet werden und die Temperatur für das Wachstum geeignet ist. Hierzu ist eine minimale Bodenfeuchte notwendig, ähnlich wie sie bei einer Düngung notwendig ist. Dadurch kann der Einsatz des Wirkmittels genauer dosiert werden und ein Wegwaschen des Wirkmittels möglichst ausgeschlossen werden. Nach Injizierung des Wirkmittels wird der behandelte Bereich während einiger Wochen, beispielsweise 4-6 Wochen, abgesperrt und nicht bearbeitet. Innerhalb dieser Zeit wird das Wirkmittel in der Pflanze abgebaut und tötet diese ab. Die Hauptpflanzen werden durch die erste Behandlung teilweise oder ganz abgetötet.

Die Konzentration und Dosierung des Triclopyrs im Wirkmittel wird einerseits entsprechend der Art Pflanze bestimmt. Anderseits wird der Bereich der Dosierung durch die Stärke oder Grösse der zu beseitigenden Pflanze bestimmt. So wird eine Minimaldosierung so bestimmt, dass die Pflanze möglichst abgetötet wird. Je nach Pflanzenart, die zu beseitigen ist, wird die Dosierung des Triclopyrs angepasst. Zudem wird die Dosierung des Triclopyrs am oberen Ende des Bereichs so begrenzt, um eine Verunreinigung des Bodens und Wassers möglichst zu vermeiden, das heisst um zu gewährleisten, dass möglichst die gesamte Menge des Wirkmittels auch von der Pflanze aufgenommen wird und nicht in das Erdreich gelangt.

Bei dem im erfindungsgemässen Verfahren verwendeten Triclopyr handelt es sich um ein Triclopyr-Produkt wie zum Beispiel Triclopyr-butotyl mit der CAS-Nr. 64700-56-7 aus der Gruppe Chloropyridine.

Für das schwer wasserlösliche Vorauflaufherbizid wird ein Vorauflaufherbizid verwendet, das schwer, praktisch nicht oder gering wasserlöslich ist mit einer Wasserlöslichkeit von höchstens 1.1 g/Liter bei 20°C, vorzugsweise weniger als 0.5g/Liter bei 20°C.

In einer Ausführung des Verfahrens wird für das schwer wasserlösliche Vorauflaufherbizid Napropamid zur Stabilisierung oder auch sogenannt Stratifizierung des Wirkmittels Triclopyr verwendet, wobei das Napropamid durch die CAS Nr. 15299-99-7 definiert ist.

In einer weiteren Ausführung des Verfahrens wird für das schwer wasserlösliche Vorauflaufherbizid Oxyfluorfen als Stabilisator verwendet, das in gleicher Weise das Triclopyr bindet, wobei das Oxyfluorfen durch die CAS Nr. 42874-03-3 definiert ist. Es ist unter anderem auch unter dem IUPAC-Namen 2-chloro-alpha,-alpha-trifluoro-p-tolyl 3 ethoxy-4-nitrophenyl ether bekannt.

In weiteren Ausführungen des Verfahrens wird für das schwer wasserlösliche Vorauflaufherbizid und als Stabilisator des Triclopyrs einer der Wirkstoffe verwendet aus der Gruppe enthaltend Clomazone mit der CAS Nr. 81777-89-1, Alachlor mit der CAS-Nr. 15972-60-8, ein Metolachlor, beispielsweise mit der CAS-Nr. 51218-45-2, Aclonifen mit der CAS-Nr. 74070-46-5 und Linuron mit der CAS Nr. 330-55-2.

Das schwer wasserlösliche Vorauflaufherbizid wird jeweils in der Dosierung so bestimmt, dass eine Mindestmenge vorhanden ist, um die Bindung des Triclopyrs zu gewährleisten. Im Folgenden werden verschiedene Dosierungen des Napropamids sowie des Oxyfluorfens offenbart, wobei die Dosierungen für sowohl Napropamid als auch das Oxyfluorfen gleich sind.

In einer Ausführung des Verfahrens wird das Wirkmittel in folgender Dosierung verwendet:
0.5 Gramm - 10 Gramm Triclopyr und mindestens 1.7 Gramm Napropamid oder Oxyfluorfen jeweils in 1 Liter Wasser gemischt.

Diese Mischung ist für die Beseitigung von Bambus geeignet.

Die Dosierung des Napropamids oder Oxyfluorfens als Bindemittel wird entsprechend der Menge des Wassers bestimmt. Für 1 Liter Wasser ist Napropamid oder Oxyfluorfen in einer Menge im Bereich von mindestens 1.7 Gramm geeignet, um eine Bindung des Wirkmittels zu erreichen.

In einer besonderen Ausführung des Verfahrens wird das Wirkmittel für die Beseitigung von Bambus wie folgt dosiert:
6.7 Gramm Triclopyr und 3.5 Gramm Napropamid oder Oxyfluorfen in 1 Liter Wasser.

In einer weiteren Ausführung des Verfahrens wird das Wirkmittel wie folgt dosiert: 0.1 Gramm - 2 Gramm Triclopyr und mindestens 1.7 Gramm Napropamid oder Oxyfluorfen in 1 Liter Wasser gemischt. Dieses Verfahren eignet sich für die Beseitigung von irgendeinem Japanknöterich.

In einer weiteren besonderen Ausführung des Verfahrens wird zur Beseitigung von Japanknöterich das Wirkmittel wie folgt dosiert: 1.4 Gramm Triclopyr und 3.5 Gramm Napropamid oder Oxyfluorfen in 1 Liter Wasser.

In einer weiteren Ausführung des Verfahrens werden in Schritt b), dem Freilegen der zu beseitigenden Pflanzen, zusätzlich die zu beseitigenden Pflanzen bis kurz über dem Boden abgeschnitten. Vorzugsweise wird ein kleiner Teil der Pflanze dahingehend stehen gelassen, sodass sie als solche erkannt werden können. So ist es einfacher zu erkennen, welche Wurzelstöcke zu behandeln sind und welche nicht.

In einer weiteren Ausführung des Verfahrens wird in Schritt c) als Bohrgerät ein Bohrer oder eine Strunkfräse verwendet. Bei kleineren Wurzelstöcken wird vorzugsweise ein Bohrer eingesetzt, bei grösseren Wurzelstöcken oder Wurzelstöcken in hoher Dichte ist der Einsatz einer Strunkfräse vorteilhafter. Auf jeden Fall werden die Wurzelbereiche der invasiven Pflanzen so tief wie möglich sowie Rhizome durch mehrere Bohrungen oder Fräsungen angebohrt und für die Behandlung mittels Lanze zugänglich gemacht.

In einer Ausführung des Verfahrens wird ein weiterer Schritt e) durchgeführt: eine Nachkontrolle nach vorbestimmter Zeit, um noch vorhandene Pflanzen und nicht abgetötete Ausläufer der Pflanzen zu identifizieren, die zu beseitigen sind.

Falls solche Pflanzen noch vorhanden sind wird eine Nachbehandlung durchgeführt, indem der Schritt d) oder die Schritte c) und d) noch einmal durchgeführt werden.

In einer Ausführung des Verfahrens wird zur Injizierung des Wirkmittels eine Lanze mit einem Mengenmessgerät verwendet zur Angabe der ausgebrachten Menge. Dies ermöglicht weitere Optimierung der Dosierung und Kontrolle der Menge des injizierten Wirkmittels.

Je nach Dichte der zu beseitigenden Pflanzen zur Behandlung pro Quadratmeter Fläche wird in einer Ausführung jeweils 5 Liter einer der genannten Wirkmittelmischungen angewendet.

Um die Ausbringung des Wirkmittels und dessen Wirkung möglichst zu kontrollieren, wird der in Schritt a) bestimmte Flächenbereich in Teilbereiche, z.B. Quadrate aufgeteilt und zwecks Kontrolle der Dosierung markiert.

Die Markierung dient auch der Nachkontrolle des behandelten Bereichs in einem Zeitraum von beispielsweise mehreren Wochen oder zwei Monaten nach der Behandlung. In dem zu behandelnden Flächenbereich werden beispielsweise 4-5 Bohrungen pro Quadratmeter ausgeführt jeweils in einer Tiefe entsprechend der Stärke (Dicke oder Grösse) und dem Alter der Pflanzen. Der Ort der Bohrungen wird auch so bestimmt, um genügend Distanz von angrenzenden Pflanzen zu gewähren, die von der Behandlung ausgespart werden sollen.

Vorzugsweise wird nach der Behandlung mit Schritten a) bis f) in einem Schritt e) der behandelte Flächenbereich während zwei Vegetationsperioden ruhen gelassen, indem keine Grabarbeiten oder Humussierung in dem Bereich durchgeführt werden. Eine Vegetationsperiode entspricht zum Beispiel im mitteleuropäischen Raum der Zeit zwischen ca. April bis ca. November.

Nach Bedarf werden Neuaustriebe bei einer Nachbehandlung sofort mit Anbohren der Wurzeln und Injizieren des Mittels nach Schritten c) und d) behandelt.

Eine Endkontrolle wird vorzugsweise im darauffolgenden Frühjahr durchgeführt. Erst dann, wenn keine neuen Austriebe festgestellt werden, wird der behandelte Flächenbereich für eine neue Nutzung mit neuen Pflanzen freigegeben.

Eine Erfolgschance des erfindungsgemässen Verfahrens, dass bei einer ersten Endkontrolle im ersten darauffolgenden Frühjahr keine neuen Triebe wachsen, liegt bei 95%.

Gemäss Anspruch 8 wird ein Wirkmittel zur Beseitigung von Pflanzen zur Verwendung im erfindungsgemässen Verfahren, wie zum Beispiel invasiven Neophyten, offenbart. Es enthält Triclopyr, ein schwer wasserlösliches Vorauflaufherbizid und Wasser, wobei das Vorauflaufherbizid eine Wasserlöslichkeit von höchstens 1.1 g/Liter bei 20°C aufweist und das Vorauflaufherbizid Oxyfluorfen ist.

Weitere Ausführungen des erfindungsgemässen Wirkmittels enthält Triclopyr, ein schwer wasserlösliches Vorauflaufherbizid und Wasser, wobei das Vorauflaufherbizid ein Wirkstoff aus der Gruppe, Clomazone Alachlor, Metolachlor, Aclonifen und Linuron ist. Dieses Wirkmittel kommt auch in dem erfindungsgemässen Verfahren zur Anwendung.

Eine Ausführung des Wirkmittels enthält 0.5- 10 Gramm Triclopyr und mindestens 1.7 Gramm Napropamid oder Oxyfluorfen jeweils in 1 Liter Wasser gemischt.

Eine besondere Ausführung des Wirkmittels enthält in jeweils 1 Liter Wasser gemischt 6.7 Gramm Triclopyr und 3.5 Gramm Napropamid oder Oxyfluorfen. Diese Mischung eignet sich besonders für die Abtötung von Bambus, und wird in dem erfindungsgemässen Verfahren für deren Beseitigung verwendet.

Eine weitere Ausführung des Wirkmittels enthält jeweils 1 Liter Wasser gemischt 0.1- 2 Gramm Triclopyr und mindestens 1.7 Gramm Napropamid oder Oxyfluorfen.

Eine weitere besondere Ausführung des Wirkmittels enthält 1.4 Gramm Triclopyr und 3.5 Gramm Napropamid oder Oxyfluorfen jeweils in 1 Liter Wasser gemischt. Diese Mischung eignet sich besonders für die Abtötung von irgendeinem Japanknöterich und wird in dem erfindungsgemässen Verfahren für deren Beseitigung verwendet.

## Patentansprüche

1. Verfahren zur Beseitigung von Pflanzen aus der Gruppe Japanischer Staudenknöterich (Reynoutria japonica oder Fallopia japonica),
Sachalin-Knöterich (Reynoutria sachalinensis),
Himalaja-Knöterich (Polygonum polystachyum),
Bastard-Knöterich,
Bambus (Phyllostachys aurea),
Bambus (Pleioblastus pygamaeus Distichus),
Essigbaum (Rhus typhina),
Katzenschwanz (Acalypha hispida)
ohne Entfernung von Erdreich, Mauerwerk, Strassenbelag oder Gleisunterlage **gekennzeichnet durch** die Schritte:
a) Bestimmung und/oder Markierung eines zu behandelnden Flächenbereichs mit zu beseitigenden Pflanzen,
b) Freilegen der zu beseitigenden Pflanzen und deren Wurzelbereich im Flächenbereich aus Schritt a), indem die zu beseitigenden Pflanzen durch Mähen von umliegenden nicht-invasiven Pflanzen freigelegt werden und jeweils die zu beseitigenden Pflanzen bis kurz über dem Boden abgeschnitten und ein kleiner Teil der Pflanzen dahingehend stehen gelassen werden, sodass sie als solche erkennbar sind,
c) Ausführen von Bohrungen im Wurzel- und Rhizombereich der zu beseitigenden Pflanzen im Untergrund mittels eines Bohrgeräts.
d) Injizierung eines Wirkmittels enthaltend Triclopyr, ein schwer wasserlösliches Vorauflaufherbizid und Wasser mittels einer Lanze in die Bohrungen während der Vegetationszeit der Pflanze, wobei das Vorauflaufherbizid eine Wasserlöslichkeit von höchstens 1.1 g/Liter bei 20°C aufweist.

2. Verfahren nach Anspruch 1
**gekennzeichnet durch**
in Schritt d) die Verwendung von Napropamid als schwer wasserlösliches Vorauflaufherbizid.

3. Verfahren nach Anspruch 1
**gekennzeichnet durch**
in Schritt d) die Verwendung von Oxyfluorfen als schwer wasserlösliches Vorauflaufherbizid.

4. Verfahren nach Anspruch 1
**gekennzeichnet durch**
in Schritt d) die Verwendung von einem Wirkstoff aus der Gruppe Clomazone, Alachlor, Metolachlor, Aclonifen und Linuron als schwer wasserlösliches Vorauflaufherbizid.

5. Verfahren nach Anspruch 2 oder 3
**gekennzeichnet durch**
Verwendung des Wirkmittels enthaltend:
0.5 Gramm - 10 Gramm Triclopyr und mindestens 1.7 Gramm des schwer wasserlöslichen Vorauflaufherbizids pro 1 Liter Wasser.

6. Verfahren nach Anspruch 5
**gekennzeichnet durch**
Verwendung des Wirkmittels enthaltend:
6.7 Gramm Triclopyr und 3.5 Gramm des schwer wasserlöslichen Vorauflaufherbizids pro 1 Liter Wasser.

7. Verfahren nach Anspruch 1
**dadurch gekennzeichnet, dass**
das Vorauflaufherbizid eine Wasserlöslichkeit von weniger als 0.5 g/Liter bei 20°C aufweist.

8. Wirkmittel zur Beseitigung von Pflanzen zur Verwendung im Verfahren nach Anspruch 1
**dadurch gekennzeichnet, dass**
das Wirkmittel Triclopyr, ein schwer wasserlösliches Vorauflaufherbizid und Wasser enthält, wobei das schwer wasserlösliche Vorauflaufherbizid Oxyfluorfen ist.

9. Wirkmittel nach Anspruch 8
**dadurch gekennzeichnet, dass**
das Wirkmittel 0.5 bis 10 Gramm Triclopyr und mindestens 1.7 Gramm Oxyfluorfen pro 1 Liter Wasser enthält.

10. Wirkmittel nach Anspruch 9
**dadurch gekennzeichnet, dass**
das Wirkmittel 6.7 Gramm Triclopyr und 3.5 Gramm Oxyfluorfen pro 1 Liter Wasser enthält.

11. Wirkmittel zur Beseitigung von Pflanzen zur Verwendung im Verfahren nach Anspruch 1
**dadurch gekennzeichnet, dass**
das Wirkmittel 0.5 bis 10 Gramm Triclopyr und mindestens 1.7 Gramm Napropamid pro 1 Liter Wasser enthält.

12. Wirkmittel nach Anspruch 11
**dadurch gekennzeichnet, dass**
das Wirkmittel 6.7 Gramm Triclopyr und 3.5 Gramm Napropamid pro 1 Liter Wasser enthält.

13. Wirkmittel zur Beseitigung von Pflanzen zur Verwendung im Verfahren nach Anspruch 1 **dadurch gekennzeichnet, dass**
das Wirkmittel Triclopyr, ein schwer wasserlösliches Vorauflaufherbizid und Wasser enthält, wobei das Vorauflaufherbizid eine Wasserlöslichkeit von weniger als 1.1 g/Liter bei 20°C aufweist und
das schwer wasserlösliche Vorauflaufherbizid ein Wirkstoff aus der Gruppe Clomazone, Alachlor, Metolachlor, Aclonifen und Linuron ist.

## Claims

1. Method for removing plants from the group Japanese knotweed (Reynoutria japonica or Fallopia japonica),
Sakhalin knotweed (Reynoutria sachalinensis),
Himalayan knotweed (Polygonum polystachyum),
bastard knotweed,
bamboo (Phyllostachys aurea),
bamboo (Pleioblastus pygamaeus distichus),
staghorn sumac (Rhus typhina),
chenille plant (Acalypha hispida),
without removal of soil, masonry, road surface or rail track bed, **characterized by** the following steps:
a) determining and/or marking of a surface area to be treated with plants to be removed,
b) exposing the plants to be removed and their root area in the surface area from step a) by exposing the plants to be removed by mowing of surrounding non-invasive plants and cutting the plants to be removed just above the ground and allowing a small part of the plants to be left so that they are recognizable as such,
c) drilling bore holes in the root and rhizome area of the plants to be removed in the underground by means of a drill;
d) injecting an active agent containing triclopyr, a sparingly water-soluble pre-emergence herbicide and water by means of a lance into the boreholes during the growing season of the plant, wherein the pre-emergence herbicide has a water solubility of at most 1.1 g/liter at 20°C.

2. Method according to claim 1,
**characterized by**
the use in step d) of napropamide as a sparingly water-soluble pre-emergence herbicide.

3. Method according to claim 1,
**characterized by**
the use in step d) of oxyfluorfen as a sparingly water-soluble pre-emergence herbicide.

4. Method according to claim 1,
**characterized by**
the use in step d) of an active agent from the group clomazone, alachlor, metolachlor, aclonifen and linuron as a sparingly water-soluble pre-emergence herbicide.

5. Method according to claim 2 or 3,
**characterized by**
the use of the active agent, containing:
0.5 grams to 10 grams of triclopyr and at least 1.7 grams of the sparingly water-soluble pre-emergence herbicide per 1 liter of water.

6. Method according to claim 5,
**characterized by**
the use of the active agent, containing:
6.7 grams of triclopyr and 3.5 grams of the sparingly water-soluble pre-emergence herbicide per 1 liter of water.

7. Method according to claim 1,
**characterized in that**
the pre-emergence herbicide has a water solubility of less than 0.5 g/liter at 20°C.

8. Active agent for the removal of plants for use in the method according to claim 1,
**characterized in that**
the active agent contains triclopyr, a sparingly water-soluble pre-emergence herbicide and water, wherein the sparingly water-soluble pre-emergence herbicide is oxyfluorfen.

9. Active agent according to claim 8,
**characterized in that**
the active agent contains 0.5 to 10 grams of triclopyr and at least 1.7 grams of oxyfluorfen per 1 liter of water.

10. Active agent according to claim 9,
**characterized in that**
the active agent contains 6.7 grams of triclopyr and 3.5 grams of oxyfluorfen per 1 liter of water.

11. Active agent for the removal of plants for use in the method according to claim 1,
**characterized in that**
the active agent contains 0.5 to 10 grams of triclopyr and at least 1.7 grams of napropamide per 1 liter of water.

12. Active agent according to claim 11,
**characterized in that**
the active agent contains 6.7 grams of triclopyr and 3.5 grams of napropamide per 1 liter of water.

13. Active agent for the removal of plants for use in the method according to claim 1,
**characterized in that**
the active agent contains triclopyr, a sparingly water-soluble pre-emergence herbicide and water, wherein the pre-emergence herbicide has a water solubility of less than 1.1 g/liter at 20°C and the sparingly water-soluble pre-emergence herbicide is an active ingredient from the group clomazone, alachlor, metolachlor, aclonifen and linuron.

## Revendications

1. Procédé d'élimination de plantes du groupe constitué par :
la renouée du Japon (Reynoutria japonica ou Fallopia japonica),
la renouée de Sakhaline (Reynoutria sachalinensis),
la renouée de l'Himalaya (Polygonum polystachyum),
la renouée hybride,
le bambou (Phyllostachys aurea),
le bambou (Pleioblastus pygamaeus Distichus),
le sumac vinaigrier (Rhus typhina),
la chenille (Acalypha hispida),
sans enlèvement de terre, de maçonnerie, de revêtement routier ou de sous-couche de voie ferrée,
**caractérisé par** les étapes consistant à :
a) déterminer et/ou marquer une zone de surface à traiter contenant des plantes à éliminer,
b) exposer les plantes à éliminer et leur zone de racines dans la zone de surface de l'étape a) en exposant les plantes à éliminer en fauchant les plantes non envahissantes environnantes et en coupant les plantes à éliminer un peu au-dessus du sol, en laissant une petite partie des plantes de sorte qu'elles soient reconnaissables en tant que telles,
c) forer des trous dans le sol dans la zone des racines et des rhizomes des plantes à éliminer à l'aide d'un outil de forage,
d) injecter un agent actif comprenant du triclopyr, un herbicide de prélevée peu soluble dans l'eau et de l'eau dans les trous au moyen d'une lance pendant la période de végétation de la plante, l'herbicide de prélevée ayant une solubilité dans l'eau d'au plus 1,1 g/litre à 20 °C.

2. Procédure selon la revendication 1,
**caractérisé par**
à l'étape d), l'utilisation de napropamide comme herbicide de prélevée peu soluble dans l'eau.

3. Procédé selon la revendication 1,
**caractérisé par**
à l'étape d), l'utilisation d'oxyfluorfène comme herbicide de prélevée peu soluble dans l'eau.

4. Procédé selon la revendication 1,
**caractérisé par**
à l'étape d), l'utilisation d'une substance active appartenant au groupe constitué par le clomazone, l'alachlore, le métolachlore, l'aclonifène et le linuron comme herbicide de prélevée peu soluble dans l'eau.

5. Procédure selon la revendication 2 ou 3,
**caractérisé par**
l'utilisation de l'agent actif contenant :
de 0,5 grammes à 10 grammes de triclopyr et au moins 1,7 grammes de l'herbicide de prélevée peu soluble dans l'eau par litre d'eau.

6. Procédé selon la revendication 5,
**caractérisé par**
l'utilisation de l'agent actif contenant :
6,7 grammes de triclopyr et 3,5 grammes de l'herbicide de prélevée peu soluble dans l'eau par litre d'eau.

7. Procédé selon la revendication 1,
**caractérisé en ce que**
l'herbicide de prélevée a une solubilité dans l'eau inférieure à 0,5 g/litre à 20 °C.

8. Agent actif pour l'élimination de plantes destiné à être utilisé dans le procédé selon la revendication 1,
**caractérisé en ce que**
l'agent actif contient du triclopyr, un herbicide de prélevée peu soluble dans l'eau et de l'eau, l'herbicide de prélevée peu soluble dans l'eau étant de l'oxyfluorfène.

9. Agent actif selon la revendication 8,
**caractérisé en ce que**
l'agent actif contient de 0,5 à 10 grammes de triclopyr et au moins 1,7 grammes d'oxyfluorfène par litre d'eau.

10. Agent actif selon la revendication 9,
**caractérisé en ce que**
l'agent actif contient 6,7 grammes de triclopyr et 3,5 grammes d'oxyfluorfène par litre d'eau.

11. Agent actif pour l'élimination de plantes destiné à être utilisé dans le procédé selon la revendication 1,
**caractérisé en ce que**
l'agent actif contient de 0,5 à 10 grammes de triclopyr et au moins 1,7 grammes de napropamide par 1 litre d'eau.

12. Agent actif selon la revendication 11,
**caractérisé en ce que**
l'agent actif contient 6,7 grammes de triclopyr et 3,5 grammes de napropamide par litre d'eau.

13. Agent actif pour l'élimination de plantes destiné à être utilisé dans le procédé selon la revendication 1,
**caractérisé en ce que**
l'agent actif contient du triclopyr, un herbicide de prélevée peu soluble dans l'eau et de l'eau, l'herbicide de prélevée ayant une solubilité dans l'eau inférieure à 1,1 g/litre à 20 °C et l'herbicide de prélevée peu soluble dans l'eau étant une substance active appartenant au groupe constitué par le clomazone, l'alachlore, le métolachlore, l'aclonifène et le linuron.
